# EUROPEAN PATENT SPECIFICATION

(11) **EP 2 852 188 B1**
(45) Date of publication and mention of the grant of the patent: **20.11.2019**
(21) Application number: 13790052.8
(22) Date of filing: 02.05.2013
(51) Int. Cl.: H04W 4/06, H04W 72/00, H04L 12/18

(54) **MBMS PROCESSING METHOD AND APPARATUS**
MBMS-VERARBEITUNGSVERFAHREN UND VORRICHTUNG
PROCÉDÉ ET APPAREIL DE TRAITEMENT DE MBMS

(30) Priority: 18.05.2012 CN 201210156420
(43) Date of publication of application: 25.03.2015
(73) Proprietor: ZTE Corporation, Shenzhen, Guangdong 518057 (CN)
(72) Inventor: XU, Hui, Shenzhen Guangdong 518057 (CN); MA, Zijiang, Shenzhen Guangdong 518057 (CN)
(74) Representative: Lavoix
(86) International application number: PCT/CN2013/075093
(87) International publication number: WO 2013/170707

(56) References cited:
- EP-A1- 2 745 586
- CN-A- 101 257 374
- CN-A- 102 264 040
- CN-A- 102 291 688
- MEDIATEK INC: "MBMS UE Capability", 3GPP DRAFT; R2-122234_DISC MBMS UE CAPABILITY V 2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague, Czech; 20120521 - 20120525, 15 May 2012 (2012-05-15), XP050607196, [retrieved on 2012-05-15]
- ERICSSON ET AL: "MBMSInterestIndication for connected UEs", 3GPP DRAFT; R2-116190 MBMSINTERESTINDICATION FOR CONNECTED UES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. San Francisco, USA; 20111110 - 20111114, 8 November 2011 (2011-11-08), XP050564477, [retrieved on 2011-11-08]

## Description

### TECHNICAL FIELD

The disclosure relates to the field of communications, and in particular to a method and apparatus for processing a Multimedia Broadcast Multicast Service (MBMS), as well as method and device for receiving an MBMS service.

### BACKGROUND

With the rapid development of Internet and the popularization of large-screen multi-functional mobile phones, there are a large number of mobile data multimedia services and various high bandwidth multimedia services, such as video conference, TV broadcast, video on demand, video advertisement, online education, interactive game or the like, which not only meet the increasing service demand of the mobile users but also bring new service increase points to the mobile operating companies. These mobile data multimedia services and various high bandwidth multimedia services require that a plurality of users can simultaneously receive the same data, and as compared to common data service, they have features of large data amount, long duration, and sensitive delay or the like.

In order to effectively use the mobile network resources, the 3rd Generation Partnership Project (3GPP) proposes an MBMS service, which is a technology for transmitting data from one data source to a plurality of targets, achieving the share of the network (including a core network and an access network) resources and improving the utilization rate of the network resources (especially air interface resources). The MBMS service defined by the 3GPP can not only achieve message class multicast and broadcast with pure text and low rate but also achieve the broadcast and multicast of high speed multimedia services and provide various rich video, audio and multimedia services, which undoubtedly conforms to the development trend of the future mobile data and provides a better service prospect for the development of the 3rd Generation (3G).

Currently, the MBMS service is introduced into a Long Term Evolution (LTE) Release 9 (R9) system, and optimized in the LTE Release 10 (R10). The bearing of the MBMS service in a system is achieved by transmission of both required control signalling (also referred to as MBMS service control signalling) and user data (also referred to as MBMS service). The control signalling will inform a receiving end, such as a terminal, a User Equipment (UE) or the like of corresponding control parameters, guiding the receiving end to receive, in a corresponding position, the MBMS service (that is, corresponding user data) that it is interested in. The MBMS control signalling (control information, including configuration information of the MBMS service etc.) is transmitted by a Multicast Control Channel (MCCH) in the LTE system. The MBMS SERVICE is transmitted by a Multicast Traffic Channel (MTCH).

Each of configuration parameters of MCCH repetition cycle and modification cycle is configured by a network side (in this application, the network side is a Radio Access Network (RAN), that is, Evolved Universal Terrestrial Radio Access Network (UTRAN) (E-UTRAN), including eNB, MCE and so on, in this application, the eNB is taken as an example to illustrate), the network side transmits the configuration parameters to the UE by a System Information Block13 (SIB13) in a Broadcast Control Channel (BCCH). The UE may acquire the configuration parameters of MCCH repetition cycle and modification cycle by reading the SIB13 in the BCCH, and the UE may read MCCH information in a corresponding position.

In the relevant technology, the MBMS control signalling and the MBMS service are transmitted by Multicast Broadcast Single Frequency Network Area (MBSFN Area). Transmitting the control signalling and the user data in the MBSFN area is to synchronously transmit the control signalling and the user data in a cell or eNB, so that the UE may obtain a corresponding combined gain, the MBSFN technology requires that each cell within the MBSFN area transmits the same data contents in a time-frequency resource. In this way, the resources of each cell must be scheduled and planned uniformly. Currently, a Multi-cell/multicast Coordination Entity (MCE) network element is used to schedule and plan radio resources.

In the LTE system, a cell has only one uplink carrier and downlink carrier. In the Long Term Evolution-Advance (LTE-A) stage, uplink and downlink of one LTE-A cell may be configured with a plurality of Component Carriers (CCs) to improve the transmission rate of the uplink and downlink. The plurality of CCs may be put together to form a transmission bandwidth with a maximum of 100 MHZ. The UE may receive and transmit data on one or more CCs (depending on the capability of the UE itself), which is referred to as Carrier Aggregation (CA). Assume that one LTE-A cell has a plurality of uplink and downlink CCs, then for the UE in the cell which is in an idle mode, the power consumption of UE is reduced to simplify the behaviour of the UE in an idle mode. Therefore, the UE in idle mode always is in some CC. However, when the UE enters a connection mode, to make the UE capable of receiving and transmitting the data at a higher rate, a CC activation process is needed to manage the carrier, enabling the UE to schedule the data on the plurality of CCs simultaneously.

In a CA scene, a plurality of carriers may be deployed in the identical geographic area. For one UE in a Radio Resource Control Connected (RRC Connected) mode, one Primary Cell (PCell) and one or more Secondary Cell (SCell) may be defined, wherein the PCell and the SCell corresponding to one UE may be collectively referred to as a serving cell. In a 3GPP Rel-10, the UE having the MBMS service and the CA capability may at least receive the MBMS service at the PCell. In a 3GPP Rel-11, the UE reports Supported Band Combination (SBC) information to the network side, the E-UTRAN on the network side judges by the SBC information the capability of receiving the MBMS service of the UE, that is, the network side tries to provide frequency indicated in the SBC information to achieve the requirement that the UE receives the MBMS service and unicast service.

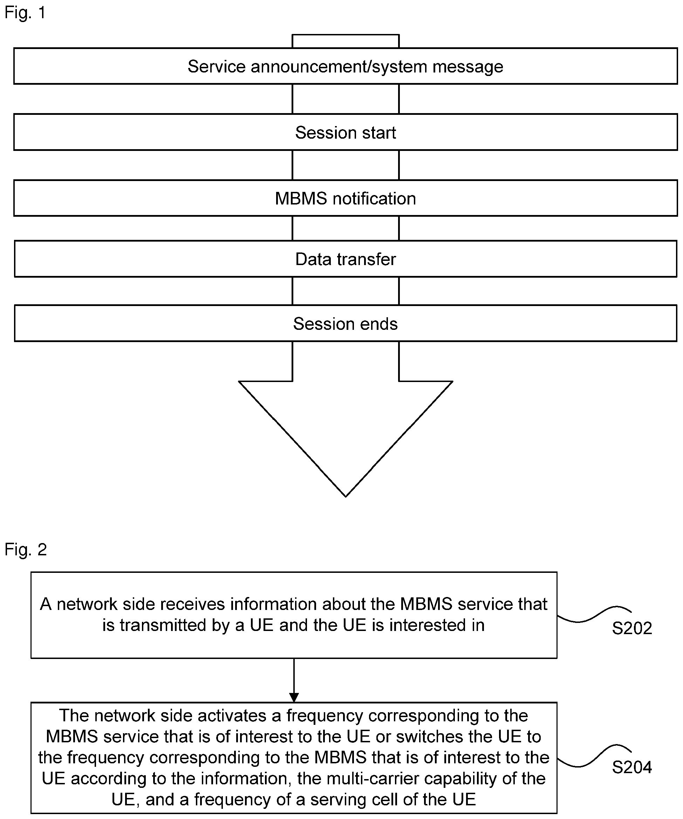

Fig. 1 is a schematic diagram of stages of a method for MBMS transmission of the relevant technology. As shown in Fig. 1, the method includes the following five stages:
the first stage is a service announcement/system message; the goal of the service announcement is to transmit information about the MBMS service to a user, the information including such as Temporary Mobile Group Identity (TMGI), service introduction, service parameters, service start time, Service Area Identity (SAI), may also including information about the frequency of the MBMS service; the service announcement may be borne in User Service Description (USD); the service announcement is part of application layer information; the system message broadcasts access layer parameters of the MBMS service, such as the SAI, the frequency of the MBMS service or the like;
the second stage is Session Start;
the third stage is MBMS notification;
the fourth stage is Data transfer; and
the fifth stage is Session Stop.

The UE which is in an RRC Idle mode or in an RRC Connected mode may receive the MBMS service. In the 3GPP Rel-11, the UE in an RRC Connected mode may report the indication information about the MBMS service to the network side by an RRC layer message, for example, MBMSInterestIndication information is set in the RRC layer message. The frequency where the MBMS service that the UE is interested in receiving is (MBMS service that the UE is interested in receiving may have already begun to play or may not yet have begun to play) is included in the MBMS service identification information. The reported frequency number may not exceed the frequency number indicated in the SBC information. In order to reduce a load of a system, a plurality of MBMS services may be deployed on one CC or more CCs. However, in general, one MBMS service may be deployed on one CC.

EP 2745586 A1 discloses a method in a base station of a mobile communication network for supporting continuity of a Multimedia Broadcast Multicast service, MBMS, for a terminal. This document falls under Art. 54(3) EPC.

The article MEDIATEK INC, "MBMS UE Capability", 3GPP DRAFT; R2-122234_DISC MBMS UE CAPABILITY V 2, 3RD GENERATION PARTNERSHIP PROJECT (3GPP),vol. RAN WG2, no. Prague, Czech, discusses the requirements of Rel-11 UE and how could eNB interpret MBMS UE capability with Rel-10 UE capability.

Currently, no effective solution has been proposed for solving the problem that the receiving efficiency of the MBMS service is relatively low in the multi-carrier environment in the relevant technology.

### SUMMARY

For solving the problem that the receiving efficiency of the MBMS service is relatively low in the multi-carrier environment in the relevant technology, the disclosure provides a processing method and apparatus for an MBMS service.

The invention is directed to a method for processing a Multimedia Broadcast Multicast Service according to claim 1, to an apparatus for processing a Multimedia Broadcast Multicast Service according to claim 7, to a software for processing a Multimedia Broadcast Multicast Service according to claim 10 and to a storage medium according to claim 11.

Preferred embodiments are set out in the dependent claims.

By means of the MBMS processing method and apparatus, the network side activates the frequency corresponding to the MBMS service that is of interest to the UE or switches the UE to the frequency corresponding to the MBMS service that is of interest to the UE according to the received information about the MBMS service that is of interest to the UE transmitted by the UE, the multi-carrier capability of the UE, and the frequency of the serving cell of the UE. In a multi-carrier environment, the network side activates the frequency corresponding to the MBMS service that is of interest to the UE or switches the UE to the frequency according to the information about the MBMS service that is of interest to the UE reported by the UE, so as to receive the MBMS service that is of interest to the UE, which solves the problem that the receiving efficiency of an MBMS service is relatively low in the multi-carrier environment in the relevant technology, and achieves the effect of improving the MBMS receiving efficiency of the UE.

### BRIEF DESCRIPTION OF THE DRAWINGS

The accompanying drawings described herein serve to provide a further understanding of the disclosure, and constitute a part of this application. The schematic embodiments of the disclosure and description thereof serve to explain the disclosure rather than to limit the disclosure inappropriately. In the drawings:
Fig. 1 is a schematic diagram of stages of an MBMS transmitting method of the relevant technology;
Fig. 2 is a flowchart of an MBMS processing method according to an embodiment of the disclosure;
Fig. 3 is a flowchart of an MBMS receiving method according to an embodiment of the disclosure;
Fig. 4 is a structure diagram of an MBMS processing apparatus according to an embodiment of the disclosure;
Fig. 5 is a preferred structure diagram of an MBMS processing apparatus according to an embodiment of the disclosure;
Fig. 6 is a structure diagram of an MBMS receiving apparatus according to an embodiment of the disclosure;
Fig. 7 is a structure diagram of an MBMS receiving system according to an embodiment of the disclosure;
Fig. 8 is a flowchart of an MBMS receiving method according to an embodiment of the disclosure;
Fig. 9 is a flowchart of UE capability transmission according to an embodiment of the disclosure;
Fig. 10 is flowchart I of an MBMS receiving method according to a preferred embodiment of the disclosure;
Fig. 11 is flowchart II of an MBMS receiving method according to a preferred embodiment of the disclosure;
Fig. 12 is flowchart III of an MBMS receiving method according to a preferred embodiment of the disclosure;
Fig. 13 is a structure diagram of an MBMS receiving system according to an embodiment of the disclosure; and
Fig. 14 is a structure diagram of a UE for receiving an MBMS service according to an embodiment of the disclosure.

### DETAILED DESCRIPTION

Hereinafter, the disclosure will be described in detail with reference to the accompanying drawings and in conjunction with the embodiments. It should be noted that the embodiments of the application and the features of the embodiments may be combined with each other without any conflict.

In an embodiment, a method for processing an MBMS service is provided. Fig. 2 is a flowchart of an MBMS processing method according to an embodiment of the disclosure. The method includes Step S202 to Step S204 as follows.

Step S202: A network side receives information about an MBMS service that is transmitted by a UE and the UE is interested in.

Step S204: The network side activates a frequency corresponding to the MBMS service that the UE is interested in or switches the UE to the frequency corresponding to the MBMS service that is of interest to the UE according to the information, the multi-carrier capability of the UE, and a frequency of a serving cell of the UE.

By means of the above steps, the network side activates the frequency corresponding to the MBMS service that is of interest to the UE or switches the UE to the frequency corresponding to the MBMS service that is of interest to the UE according to the received information about the MBMS servicethat is of interest to the UE transmitted by the UE, the multi-carrier capability of the UE, and the frequency of the serving cell of the UE. In a multi-carrier environment, the network side activates the frequency corresponding to the MBMS service that is of interest to the UE or switches the UE to the frequency according to the information about the MBMS service that is of interest to the UE reported by the UE, so as to receive the MBMS service that is of interest to the UE, which overcomes the problem that the receiving efficiency of an MBMS service is relatively low in the multi-carrier environment in the relevant technology, and improves the MBMS receiving efficiency of the UE.

During implementation, in order to improve the receiving accuracy, the activation process or switching process may be determined according to a CA capability of the UE and whether to support receiving the MBMS service on an SCell. In the embodiment, the network side, after determining that the UE has the CA capability, judges whether the UE supports receiving the MBMS service on the SCell in a serving cell, in a case of Yes, activates the frequency corresponding to the MBMS service, and in a case of No, switches the UE to the frequency corresponding to the MBMS service that is of interest to the UE.

In the above embodiment, in order to improve the utilization rate of resources, in a case where the network side determines that the UE has the CA capability, and judges that the UE supports receiving the MBMS service on the SCell, the network side determines whether to activate the frequency corresponding to the MBMS service according to whether the frequency corresponding to the MBMS service that is of interest to the UE is the frequency of the serving cell of the UE.

When the frequency corresponding to the MBMS service that is of interest to the UE is not the frequency of the serving cell of the UE, in a case where a frequency combination supported by the UE is determined to have been activated completely, the network side may deactivate one SCell of the frequency combination, then activate the frequency corresponding to the MBMS service that is of interest to the UE; alternatively, in a case where the frequency combination supported by the UE is determined to not yet be activated completely, the network side activates the frequency corresponding to the MBMS service that is of interest to the UE as the frequency corresponding to the SCell.

Preferably, a direct obtaining method or an indirect obtaining method may be used by the network side to judge whether the UE has the CA capability. For example, the network side makes a judgment by receiving from the UE information about whether the UE has the CA capability, or by receiving SupportedBandCombination information reported by the UE via an RRC layer message, or by reading UE capability information reported by the UE to see whether it contains the SupportedBandCombination information. If the SBC information is present in the UE capability indication information or the frequency number in the SBC information is greater than 1, then the UE supports the CA, otherwise the UE does not support the CA. Preferably, SBC information parameters may be transmitted by the UE capability transmission process. In addition, whether the UE has the CA capability may be determined according to whether a plurality of MBMS frequency points are included in the information about the MBMS service that is of interest to the UE reported by the UE (the number of the reported MBMS frequency points is less than or equal to that in the SBC information).

During implementation, in order to improve the MBMS receiving accuracy of the UE, the activation process or switching process may be determined according to a CA capability of the UE and whether the frequency of the UE is the same as the frequency of the MBMS service that is of interest to the UE. In the embodiment, the network side, after determining that the UE has no CA capability, judges whether the frequency of the UE is the same as the frequency of the MBMS service that is of interest to the UE, and in a case of Yes, switches the UE to the frequency corresponding to the MBMS service that is of interest to the UE.

Preferably, the information about the MBMS service that is of interest to the UE includes at least one of the following: the frequency where the MBMS service that is of interest to the UE is, and whether the MBMS service that is of interest to the UE has higher priority than a unicast service. In a preferred embodiment, a plurality of information combinations may be provided, so that the accuracy that the network side determines the information about the frequency of the MBMS service may be improved. More preferably, the frequency of the MBMS service that is of interest to the UE is the frequency which is determined by a system message or an application layer message and at which the MBMS service that is of interest to the UE is transmitted by an MBSFN. 1-bit information may be used to indicate whether the MBMS service that is of interest to the UE has higher priority than a unicast service. The service with high priority is given priority during network congestion.

In order to reduce a load of signalling, the information about the MBMS service that is of interest to the UE further includes information for indicating whether the UE supports receiving the MBMS service on the SCell.

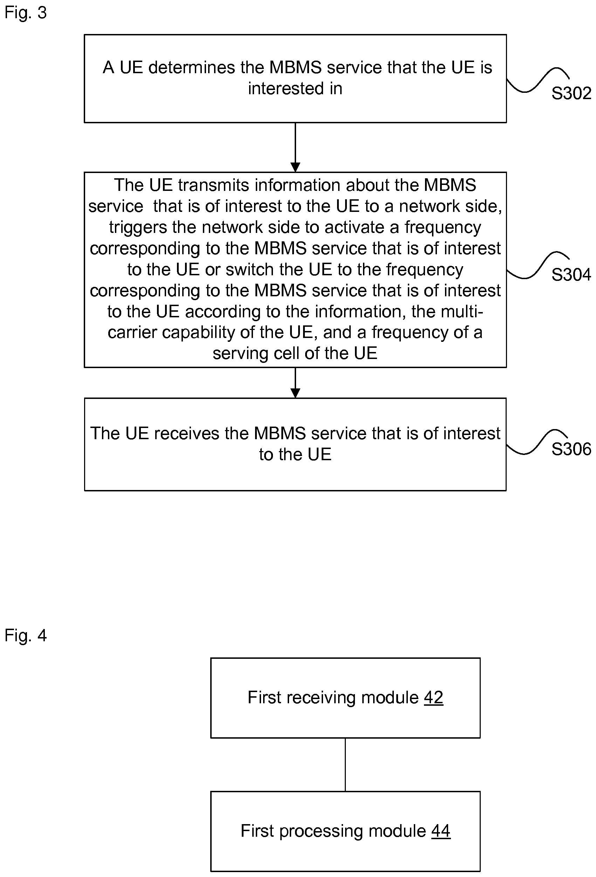

Based on the same principles, the embodiment also provides an MBMS receiving method, applied to the UE side. Fig. 3 is another flowchart of an MBMS receiving method according to an embodiment of the disclosure. The method includes Step S302 to Step S306 as follows.

Step S302: A UE determines an MBMS service that the UE is interested in.

Step S304: The UE transmits information about the MBMS service that is of interest to the UE to a network side, triggers the network side to activate a frequency corresponding to the MBMS service that is of interest to the UE or switch the UE to the frequency corresponding to the MBMS service that is of interest to the UE according to the information, the multi-carrier capability of the UE, and a frequency of a serving cell of the UE.

Step S306: The UE receives the MBMS service that is of interest to the UE.

Preferably, the information about the MBMS service that is of interest to the UE includes at least one of the following: the frequency of the MBMS service that is of interest to the UE, and whether the MBMS service that is of interest to the UE has higher priority than a unicast service. In a preferred embodiment, a plurality of information combinations may be provided, so that the accuracy that the network side determines the information about the frequency of the MBMS service may be improved. More preferably, the frequency of the MBMS service that is of interest to the UE is the frequency which is determined by a system message or an application layer message and at which the MBMS service that is of interest to the UE is transmitted by an MBSFN.

In order to reduce a load of signalling, the information about the MBMS service that is of interest to the UE further includes information for indicating whether the UE supports receiving the MBMS service on the SCell.

More preferably, the UE transmits the information about the MBMS service that is of interest to the UE to a base station at one of the following time: one is when an RRC connection is established, one is when the UE is no longer interested in receiving the MBMS service, and one is when the UE is interested in a service at other MBMS frequency. It should be noted that the above time may be a time when the operation occurs or a predetermined period of time during which the occurrence lasts.

It should be noted that the steps shown in the flowcharts of the drawings may be executed in a computer system having a group of computer-executable instructions, and although a logic sequence is shown in the flowcharts, in some cases, the steps may be executed in an order different from those shown or described here.

In another embodiment, MBMS processing software is also provided, configured to execute the technical solutions described in the above embodiments and preferred embodiments.

In another embodiment, a storage medium is also provided, which stores the above MBMS processing software. The storage medium includes but is not limited to an optical disk, a floppy disc, a hard disk, an erasable memory or the like.

The embodiment of the disclosure also provides an apparatus for processing an MBMS service, which is applied to a network side which is generally a base station. The MBMS processing apparatus may be configured to achieve the above MBMS processing method and preferred embodiments, which have been described and are not repeated herein. Modules involved in the MBMS receiving apparatus will be described below. As used below, the term "module" may implement the combination of software and/or hardware of predetermined functions. Although the system and method described in the following embodiments are preferably implemented in software, it is possible and conceived that hardware, or a combination of software and hardware may be used for implementation.

Fig. 4 is a structure diagram of an MBMS processing apparatus according to an embodiment of the disclosure. As shown in Fig. 4, the apparatus includes a first receiving module 42, and a first processing module 44. The above structures will be described below in detail.

The first receiving module 42 is configured to receive information about the MBMS service that is transmitted by a UE and the UE is interested in; the first processing module 44, connected to the first receiving module 42, is configured to activate a frequency corresponding to the MBMS service that is of interest to the UE or switch the UE to the frequency corresponding to the MBMS service that is of interest to the UE according to the information received by the first receiving module 42, the multi-carrier capability of the UE, and a frequency of a serving cell of the UE.

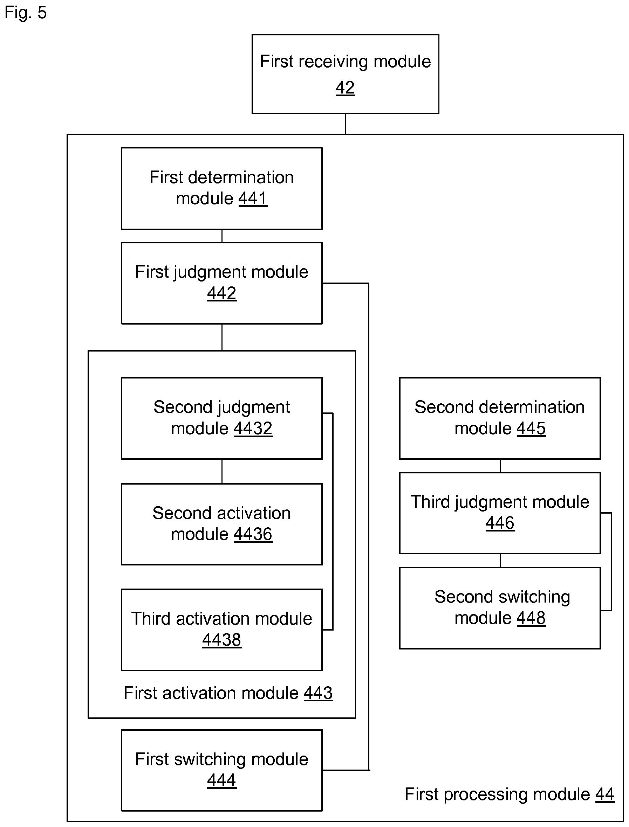

Fig. 5 is a preferred structure diagram of an MBMS processing apparatus according to an embodiment of the disclosure. As shown in Fig. 5, the first processing module 44 includes a first determination module 441, a first judgment module 442, a first activation module 443 and a first switching module 444, wherein the first activation module 443 includes a second judgment module 4432, a second activation module 4436, and a third activation module 4438; and the first processing module 44 further includes a second determination module 445, a third judgment module 446 and a second switching module 448. The above structures will be described below in detail.

The first processing module 44 includes: a first determination module 441, configured to determine that the UE has a CA capability; a first judgment module 442, connected to the first judgment module 441 and configured to, after the first determination module 441 determines that the UE has the CA capability, judge whether the UE supports receiving the MBMS service on an SCell in the serving cell; a first activation module 443, connected to the first judgment module 442 and configured to activate the frequency corresponding to the MBMS service that is of interest to the UE when the judgment result from the first judgment module 442 is Yes; and a first switching module 444, connected to the first judgment module 442 and configured to switch the UE to the frequency corresponding to the MBMS service that is of interest to the UE when the judgment result from the first judgment module 442 is No.

Preferably, the first activation module 443 includes: a second judgment module 4432, configured to judge whether the frequency corresponding to the MBMS service that is of interest to the UE is the frequency of the serving cell of the UE; a second activation module 4436, connected to the second judgment module 4432 and configured to activate the frequency corresponding to the MBMS service that is of interest to the UE in a case where the judgment result from the second judgment module 4432 is No and a frequency combination supported by the UE is judged to have been activated completely and one SCell of the frequency combination is deactivated; and a third activation module 4438, connected to the second judgment module 4432 and configured to activate the frequency corresponding to the MBMS service that is of interest to the UE as the frequency corresponding to the SCell in a case where the judgment result from the second judgment module 4432 is No and a frequency combination supported by the UE is judged to not yet be activated completely.

Preferably, the first processing module 44 includes: a second determination module 445, configured to determine that the UE has no CA capability; a third judgment module 446, connected to the second determination module 445 and configured to judge whether the frequency of the UE is the same as the frequency of the MBMS service that is of interest to the UE after the second determination module 445 determines that the UE has no CA capability; and a second switching module 448, connected to the third judgment module 446 and configured to switch the UE to the frequency corresponding to the MBMS service that is of interest to the UE when the judgment result from the third judgment module 446 is No, and trigger the UE to receive the MBMS service that is of interest to the UE.

In another embodiment, MBMS receiving software is also provided, and is configured to execute the technical solutions described in the above embodiments and preferred embodiments.

In another embodiment, a storage medium is also provided, storing the above MBMS processing software. The storage medium includes but is not limited to an optical disk, a floppy disc, a hard disk, an erasable memory or the like.

The embodiment of the disclosure also provides an apparatus for receiving an MBMS service, which is applied to a UE. The MBMS receiving apparatus may be configured to achieve the above MBMS receiving method and preferred embodiments, which have been described and are not repeated herein. Modules involved in the MBMS receiving apparatus will be described below. As used below, the term "module" may implement the combination of software and/or hardware of predetermined functions. Although the system and method described in the following embodiments are preferably implemented in software, it is possible and conceived that hardware, or a combination of software and hardware may be used for implementation.

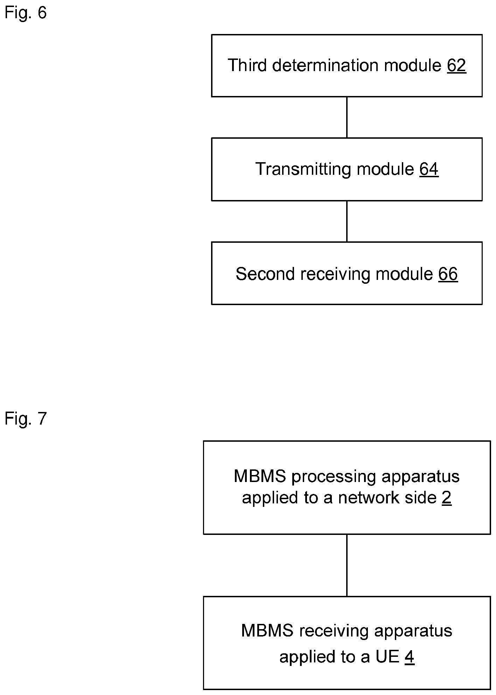

Fig. 6 is a structure diagram of an MBMS receiving apparatus according to an embodiment of the disclosure. As shown in Fig. 6, the apparatus includes a third determination module 62, a transmitting module 64, and a second receiving module 66. The above structures will be described below in detail.

The third determination module 62 is configured to determine the MBMS service that the UE is interested in; a transmitting module 64, connected to the third determination module 62 and configured to transmit information about the MBMS service that is of interest to the UE to a network side, trigger the network side to activate a frequency corresponding to the MBMS service that is of interest to the UE or switch the UE to the frequency corresponding to the MBMS service that is of interest to the UE according to the information, the multi-carrier capability of the UE, and a frequency of a serving cell of the UE; and a second receiving module 66, connected to the transmitting module 64 and configured to receive the MBMS service that is of interest to the UE.

The embodiment provides a system for receiving an MBMS service. Fig. 7 is a structure diagram of an MBMS receiving system according to an embodiment of the disclosure. The system includes an MBMS processing apparatus 2 applied to a network side and an MBMS receiving apparatus 4 applied to a UE. The structure of the MBMS processing apparatus 2 applied to the network side is as shown in Fig. 4 and Fig. 5, and the structure of the MBMS receiving apparatus 4 applied to a UE is as shown in Fig. 6, which are not repeated herein.

The disclosure will be described in conjunction with preferred embodiments which are combined with the above embodiments and preferred embodiments below.

### Preferred Embodiment I

The preferred embodiment provides method for receiving an MBMS service in a multi-carrier environment, including Step S402 to Step S404 as follows.

Step S402: A UE transmits indication information about the MBMS service that it is interested in receiving to a network side.

Step S404: The network side activates a frequency of the MBMS service that is of interest to the UE or switches the UE to the frequency of the MBMS service that is of interest to the UE according to the service indication information, the multi-carrier capability of the UE, and a frequency of a serving cell of the UE.

By means of the technical solutions provided by the preferred embodiment, the MBMS service may be received by the UE in a multi-carrier environment.

### Preferred Embodiment II

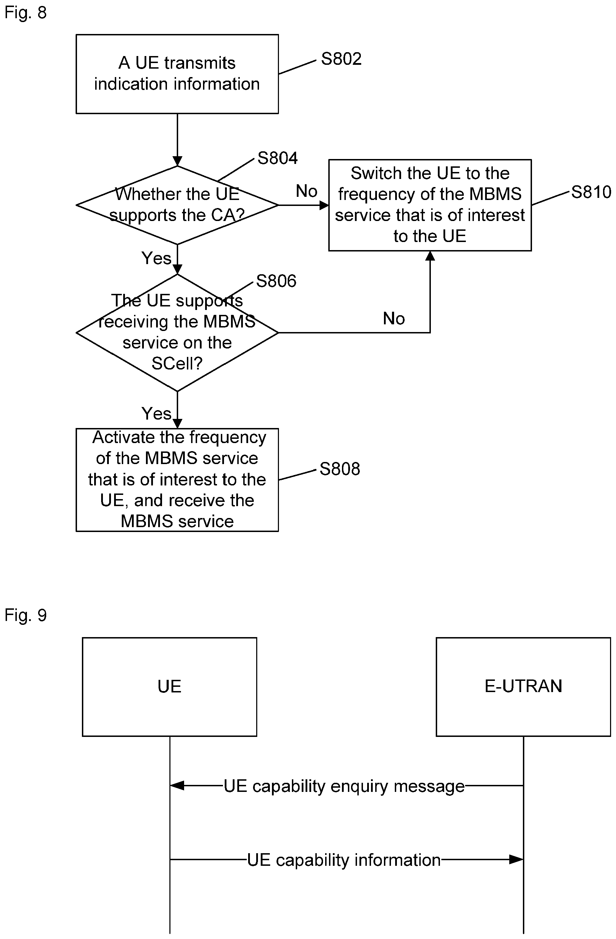

The preferred embodiment provides method for receiving an MBMS service. Fig. 8 is a flowchart of an MBMS receiving method according to an embodiment of the disclosure. As shown in Fig. 8, the method includes Step S802 to Step S810 as follows.

Step S802: A UE transmits indication information about the MBMS service that is of interest to the UE to a network side.

In this step, the UE is a UE with capability of receiving an MBMS service, and the UE is in an RRC Connected mode.

Preferably, the network side in this step may be an RAN, that is an Evolved UTRAN (E-UTRAN). More preferably, the network side includes eNB.

Preferably, the MBMS service that is of interest to the UE in this step refers to an MBMS service that the UE is receiving or interested in receiving, wherein the MBMS service that the UE is interested in receiving refers to a service (the service in this application refers to an MBMS service) which has not been started yet, but about which the UE may obtain indication information by a system message or an application layer message or the like, including for example, the information from which when the service will be started may be known.

Preferably, the indication information about the MBMS service (also referred to as indication information in this application) includes information about a frequency of the MBMS service (also referred to as an MBMS frequency point or an MBMS frequency). The indication information about the MBMS service may further include one or more of a Physical Cell ID (PCI) of the MBMS frequency, frequency point information, bandwidth information, and component carrier index information. More preferably, the indication information about the MBMS service may further include whether the UE supports receiving the MBMS service on a serving cell (i.e. SCell) other than a PCell, for example, 1-bit information may be used to indicate whether to receive the MBMS service on the SCell.

It should be noted that, in the embodiment, there may be a plurality of MBMS frequency points included in the indication information about the MBMS service, which indicates that the UE is interested in a plurality of MBMS services.

It should be noted that, in the preferred embodiment, the frequency of the MBMS service that is of interest to the UE refers to that the MBMS service that the UE is interested in is transmitted at the above frequency in a way of MBSFN, and the UE may obtain the frequency of the MBMS service that is of interest to the UE by a system message and/or an application layer message (for example, User Service Description-USD).

Step S804: The network side judges whether the UE has a CA capability, if the judgment result is Yes, Step S806 is executed, otherwise Step S810 is then executed.

In this step, the network side judging whether the UE has a CA capability refers to that the UE reports whether it has the CA capability to the network side before Step S802, for example, the UE may report SupportedBandCombination information to the network side by an RRC layer message, the network side makes a judgment by reading the UE capability information reported by the UE to see whether it contains the SupportedBandCombination information, that is, if the SBC information is present in the UE capability indication information or the frequency number in the SBC information is greater than 1, then it indicates that the UE supports the CA, otherwise the UE does not support the CA. Preferably, SBC information parameters may be transmitted by the UE capability transmission process. As shown in Fig. 9, the Evolved Universal Terrestrial Radio Access Network (E-UTRAN) transmits a UECapabilityEnquiry message to the UE, and the UE reports the UECapabilitylnformation to the E-UTRAN.

If in Step S802, a plurality of MBMS frequency points are included in the indication information about the MBMS service that is of interest to the UE reported by the UE, then it may also indicate that the UE has the CA capability. However, the number of frequency points of the MBMS service reported is less than or equal to that in the SBC information.

Step S806: Whether the UE supports receiving the MBMS service on the SCell is judged, if support, Step S808 is then executed, otherwise Step S810 is then executed.

Preferably, the judgment operation may be obtained by the indication information reported by the UE. 1-bit indication is present in the indication information reported by the UE, for example, for indicating whether the UE supports receiving the MBMS service on the SCell.

Step S808: The network side activates the frequency of the MBMS service that is of interest to the UE as the frequency of the SCell, and the flow ends.

If the UE supports receiving the MBMS service on the SCell, the network side such as eNB activates the frequency of the MBMS service that is of interest to the UE as the frequency of the SCell. If frequency of the MBMS service that is of interest to the UE has been activated, it is unnecessary to activate it again. If the network side such as eNB has activated the frequency combination indicated in the SBC information, the eNB may deactivate one SCell therein, then activate the frequency of the MBMS service.

Preferably, if there are a plurality of MBMS frequency points in which several MBMS frequency points are not the PCell of the UE, the network side further judges whether to activate one or more of MBMS frequency points, and then the UE receives the MBMS service at the activated MBMS frequency.

Preferably, in the preferred embodiment, the step of activating the frequency of the MBMS service that is of interest to the UE may be that, the frequency of the MBMS service that is of interest to the UE may be used as a combination indicated in the SBC information together with the PCell, otherwise, the UE needs to be switched to the frequency of the MBMS service that is of interest to the UE; the SBC information not only includes the frequency number supported by the UE, but also includes combination of different frequencies, such as a combination of out-of-band/in-band frequency. The out-of-band/in-band frequency refers to continuous/discontinuous frequency.

Step S810: The network side switches the UE to the frequency of the MBMS service that is of interest to the UE, and the flow ends.

It should be noted that if the UE does not support the CA, or the UE does not support receiving the MBMS service on the SCell, then the network side eNB switches the UE to the frequency of the MBMS service that is of interest to the UE, and the UE receives the MBMS service at the frequency of the MBMS service that is of interest to the UE.

### Preferred Embodiment III

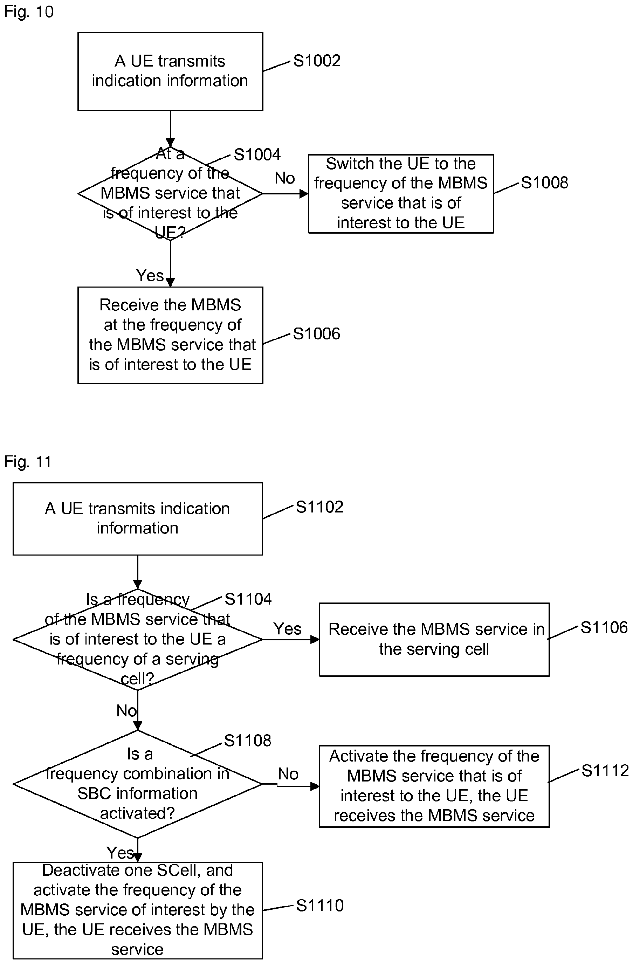

The embodiment provides a method for receiving an MBMS service. In the embodiment, the UE is in an RRC Connected mode and has no CA capability. Fig. 10 is flowchart I of an MBMS receiving method according to a preferred embodiment of the disclosure. As shown in Fig. 10, the method includes Step S1002 to Step S1008 as follows.

Step S1002: A UE transmits indication information about the MBMS service that is of interest to the UE to a network side.

It should be noted that the step is the same as Step S802 in Preferred Embodiment II and not repeated herein.

Step S1004: The UE is judged whether to be at a frequency of the MBMS service that is of interest to the UE; if the judgment result is Yes, Step S1006 is then executed, otherwise Step S1008 is then executed.

In this step, the frequency of the MBMS service that the UE is interested in may be judged whether to be the same as the frequency of the UE, wherein the frequency of the UE may be obtained by a system message.

Step S1006: The UE receives the MBMS service at the frequency of the MBMS service that is of interest to the UE, and the flow ends.

It should be noted that if the current frequency of the UE is the frequency of the MBMS service that the UE is interested in, the UE receives the MBMS service at the current frequency.

Step S1008: The network side switches the UE to a cell of the frequency of the MBMS service that is of interest to the UE, the UE receives the MBMS service at the frequency of the MBMS service, and the current processing flow ends.

Preferably, the UE may release the RRC Connection in an original serving cell, enter the frequency where the MBMS service that is of interest to the UE is, and receive the MBMS service, wherein the UE at the MBMS frequency after switching may be in an idle mode or in an connected mode.

### Preferred Embodiment IV

The embodiment provides a method for receiving an MBMS service. In the embodiment, the UE is in an RRC Connected mode, has the CA capability and supports receiving the MBMS service on the SCell. Fig. 11 is flowchart II of an MBMS receiving method according to a preferred embodiment of the disclosure. As shown in Fig. 11, the method includes Step S1102 to Step S1112 as follows.

Step S1102: A UE transmits indication information about the MBMS service that is of interest to the UE to a network side.

It should be noted that the step is the same as Step S802 in Preferred Embodiment II and not repeated herein. Preferably, the indication information about the service may indicate that the UE supports receiving the MBMS service on the SCell.

Step S1104: A frequency of the MBMS service that is of interest to the UE is judged whether to be a frequency of a serving cell, if the judgment result is Yes, then Step S1106 is executed, otherwise Step S1108 is then executed. Preferably, the serving cell includes PCell and SCell.

Step S1106: The MBMS service is received in the serving cell, and the flow ends.

It should be noted that if the frequency of the MBMS service that is of interest to the UE is the same as the frequency of the serving cell, the serving cell receives the MBMS service. If there is a unicast service in the serving cell, considering that the MBMS service is transmitted on an MBSFN resource, the UE may receive the unicast service and MBMS service in a time division multiplexing way, or the UE stops receiving the unicast service and starts receiving the MBMS service.

Step S1108: A frequency combination supported by the UE is judged whether to have been activated completely, if the judgment result is Yes, Step S1110 is then executed, otherwise Step S1112 is then executed.

It should be noted that, in this step, completed activation refers to that the network side has activated the frequency combination supported by the UE according to the indication in the SBC, for example the SBC supports the combination of 3 CCs, and the network side has activated 3 CCs (including one PCC and two SCC).

Step S1110: The network side deactivates one SCell of the frequency combination, and activates the frequency of the MBMS service that is of interest to the UE, the UE receives the MBMS service, and the flow ends.

It should be noted that deactivation or activation refer to a process during which the network side reduces or increases the SCell by RRC signalling (such as a RRCConnectionReconfiguration process).

Step S1112: The network side activates the frequency of the MBMS service that is of interest to the UE, the UE receives the MBMS service, and the flow ends.

Preferably, in a case where the frequency supported by the UE has not been activated completely, the network side activates the frequency of the MBMS service that the UE is interested in as the frequency where SCell is.

### Preferred Embodiment V

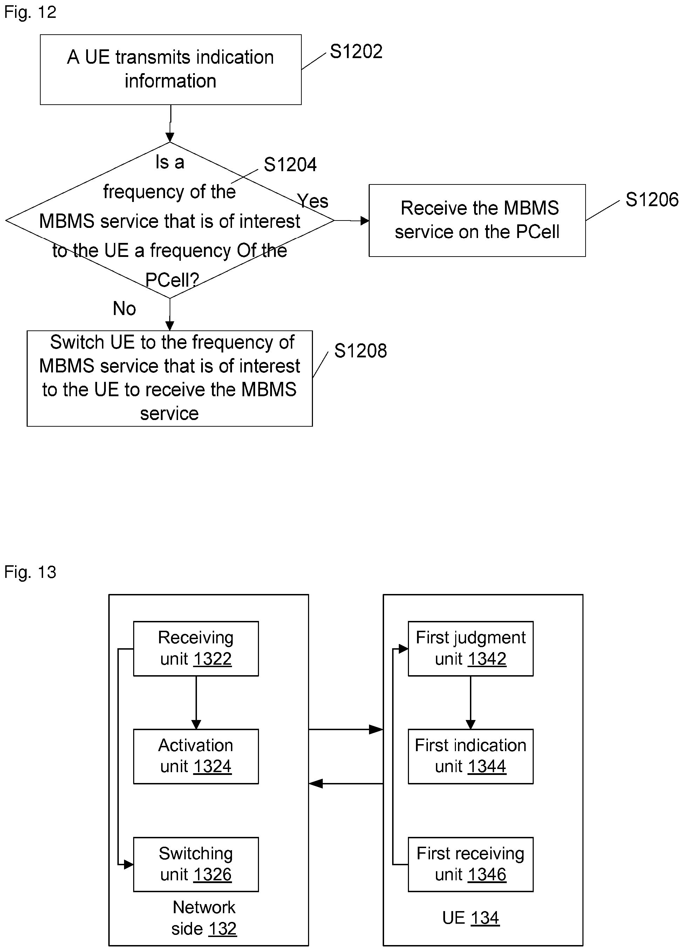

The embodiment provides a method for receiving an MBMS service. In the embodiment, the UE is in an RRC Connected mode, has the CA capability, but does not support receiving the MBMS service on the SCell. Fig. 12 is flowchart III of an MBMS receiving method according to a preferred embodiment of the disclosure. As shown in Fig. 12, the method includes Step S1202 to Step S1208 as follows.

Step S1202: A UE transmits indication information about the MBMS service that is of interest to the UE to a network side.

It should be noted that the step is the same as Step S802 in Preferred Embodiment II and not repeated herein. Preferably, the indication information about the service may indicate that the UE does not support receiving the MBMS service on the SCell.

Step S1204: A PCell of the UE is judged whether to be at a frequency of the MBMS service that is of interest to the UE, if the judgment result is Yes, Step S1206 is then executed, otherwise Step S1208 is then executed.

That is, the UE may receive the MBMS service only by the PCell, so it is only necessary to judge whether the frequency of the MBMS service that is of interest to the UE is the same as the frequency where PCell is.

Step S1206: The UE receives the MBMS service at the frequency of the MBMS service that is of interest to the UE, and the flow ends.

In this step, the UE receives the MBMS service on the PCell.

Step S1208: The network side switches the UE to a cell of the frequency of the MBMS service that is of interest to the UE, the UE receives the MBMS service in a carrier cell of the MBMS service, and the current processing flow ends.

It should be noted that, the UE may release the RRC Connection in an original serving cell, enter the frequency of the MBMS service that is of interest to the UE, and receive the MBMS service, wherein the UE at the MBMS frequency after switching may be in an RRC Idle mode or in an RRC Connected mode.

### Preferred Embodiment VI

The embodiment provides system for receiving an MBMS service. Fig. 13 is a structure diagram of an MBMS receiving system according to an embodiment of the disclosure. As shown in Fig. 13, the system includes a network side 132 (equivalent to the network side 2 in the above preferred embodiment) and a UE 134 (equivalent to the UE 4 in the above preferred embodiment), wherein the network side may include a receiving unit 1322, an activation unit 1324, and a switching unit 1326, and the UE includes a first judgment unit 1342, a first indication unit 1344 and a first receiving unit 1346. The above structures will be described in detail below.

The network side 132 is configured to receive indication information of the UE, activate a frequency of an MBMS service that is of interest to the UE or switch the UE to the frequency of the MBMS service that is of interest to the UE. The network side includes eNB. The indication information here is information about the MBMS service that the UE is interested in, borne by RRC signalling, such as MBMSInterestIndication. The UE 134 is configured to transmit the indication information to the network side and receive the MBMS service that is of interest to the UE.

Preferably, the network side may include a receiving unit 1322 (equivalent to the first receiving module 42 in the above preferred embodiment), an activation unit 1324 (configured to execute the activation operation of the first processing module 44 in the above preferred embodiment), and a switching unit 1326 (configured to execute the switching operation of the first processing module 44 in the above preferred embodiment), wherein the receiving unit 1322 is configured to receive the indication information transmitted by the UE, the activation unit 1324 is configured to activate the frequency of the MBMS service that is of interest to the UE after receiving the indication information transmitted by the indication unit 1344, and the switching unit 1326 is configured to switch the UE to the frequency of the MBMS service that is of interest to the UE.

Preferably, the UE includes a first judgment unit 1342 (equivalent to the third determination module 62 in the above preferred embodiment), an indication unit 1344 (equivalent to the transmitting module 64 in the above preferred embodiment) and a first receiving unit 1346 (configured to execute a part of functions of the second receiving module 66 in the above preferred embodiment), wherein the first judgment unit 1342 is configured to judge the frequency of the MBMS service that is of interest to the UE by the received system message and application layer message, the first indication unit 1344 is configured to transmit the information about the MBMS service that it is interested in receiving to the network side when the UE is in an RRC Connected mode, and the first receiving unit 1346 is configured to receive the MBMS service at the frequency of the MBMS service that is of interest to the UE, and also configured to receive the system message and application layer message.

### Preferred Embodiment VII

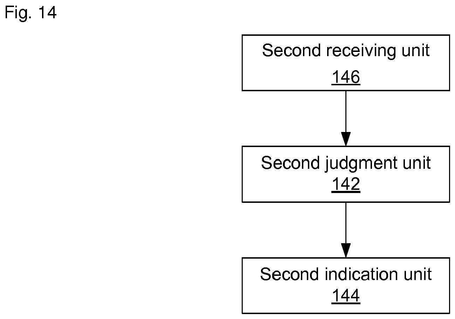

The embodiment provides a structure of a UE for receiving an MBMS service. Fig. 14 is a structure diagram of a UE for receiving an MBMS service according to an embodiment of the disclosure. As shown in Fig. 14, the UE includes a second judgment unit 142 (equivalent to the first judgment unit 1342 in the above preferred embodiment), a second indication unit 144 (equivalent to the first indication unit 1344 in the above preferred embodiment) and a second receiving unit 146 (equivalent to the first receiving unit 1346 in the above preferred embodiment). The above structures will be described in detail below.

The judgment unit 142 is configured to judge the frequency of the MBMS service that is of interest to the UE by the received system message and application layer message, for example, a frequency at which the MBMS service that is of interest to the UE is transmitted in an MBSFN way according to the system message and the USD message in the serving cell. The indication unit 62 is configured to transmit the information about the MBMS service that the UE is interested in receiving to the network side when the UE is in an RRC Connected mode, and the information includes the frequency of the MBMS service that is of interest to the UE, and whether to support receiving the MBMS service on the SCell or the like. The receiving unit 63 is configured to receive the MBMS service at the frequency of the MBMS service that is of interest to the UE, and also configured to receive the system message and application layer message.

In above embodiments, the MBMS receiving method, apparatus and system are provided. The problem that the receiving efficiency of the MBMS service is relatively low in the multi-carrier environment in the relevant technology is overcome and the MBMS receiving efficiency of the UE is improved in such a way that the UE transmits the indication information about the MBMS service that the UE is interested in receiving to the network side, and the network side activates the frequency of the MBMS service that is of interest to the UE or switches the UE to the frequency of the MBMS service that is of interest to the UE according to the indication information, the multi-carrier support capability of the UE, and the frequency of the serving cell of the UE. It should be noted that these technical effects are not possessed by all the embodiments, some obtained only by some preferred embodiments.

Obviously, those skilled in the art should understand that each of the mentioned modules or steps of the disclosure may be achieved by a universal computing apparatus; the modules or steps may be integrated on single computing apparatus, or distributed in a network formed by multiple computing apparatuses. Selectively, they may be achieved by a program code which may be executed by the computing apparatus. Thereby, the modules or steps may be stored in a storage apparatus and executed by the computing apparatus, or may be respectively manufactured as each integrated circuit module, or multiple modules or steps thereof may be manufactured as single integrated circuit module. In this way, the disclosure is not limited to any particular combination of hardware and software.

The above are only the preferred embodiments of the disclosure and are not intended to limit the disclosure, for those skilled in the art, various changes and variations may be made to the disclosure.

## Claims

1. A method for processing a Multimedia Broadcast Multicast Service, MBMS, comprising:
receiving (S202), by a network side, from a User Equipment, UE, information about an MBMS service that the UE is interested in;
determining, by the network side, whether the UE has a Carrier Aggregation, CA, capability;
when the network side determines that the UE has the CA capability, determining, by the network side, whether the UE supports receiving the MBMS service on a Secondary Cell, SCell, in the serving cell;
when the network side determines that the UE has the CA capability and that the UE supports receiving the MBMS service on the Scell in the serving cell, determining, by the network side, whether the frequency corresponding to the MBMS service that is of interest to the UE is the frequency of the serving cell of the UE;
when the network side determines that the frequency corresponding to the MBMS service that is of interest to the UE is not the frequency of the serving cell of the UE, determining, by the network side, whether the frequency combination supported by the UE has been activated completely,
when the network side determines that the frequency combination supported by the UE has been activated completely, deactivating, by the network side, one SCell of the frequency combination and activating thereafter, by the network side, the frequency corresponding to the MBMS service that is of interest to the UE; and
when the network side determines that the frequency combination supported by the UE has not been activated completely, activating, by the network side, the frequency corresponding to the MBMS service that is of interest to the UE as the frequency corresponding to the SCell.

2. The processing method according to claim 1, further comprising:
when the network side determines that the UE has the CA capability and the UE does not support receiving the MBMS service on the Scell the serving cell, switching, by the network side, the UE to the frequency corresponding to the MBMS service that is of interest to the UE.

3. The processing method according to claim 1, further comprising:
determining, by the network side, that the UE has no CA capability, or the UE has the CA capacity but a current Primary Cell, PCell, of the UE is not capable of forming a combination with the frequency of the MBMS service that is of interest to the UE;
judging, by the network side, whether the frequency or the PCell of the UE is the same as the frequency of the MBMS service that is of interest to the UE;
when a judgment result is No, switching, by the network side, the UE to the frequency corresponding to the MBMS service that is of interest to the UE.

4. The processing method according to any one of claims 1 to 3, wherein the information about the MBMS service that is of interest to the UE comprises at least one of the following:
the frequency of the MBMS service that is of interest to the UE, and whether the MBMS service that is of interest to the UE has higher priority than a unicast service.

5. The processing method according to claim 4, wherein the frequency of the MBMS service that is of interest to the UE is a frequency which is determined by a system message or an application layer message and at which the MBMS service that is of interest to the UE is transmitted by a Multicast Broadcast Single Frequency Network, MBSFN.

6. The processing method according to claim 4, wherein the information about the MBMS service that is of interest to the UE further comprises information for indicating whether the UE supports receiving the MBMS service on the SCell.

7. An apparatus for processing a Multimedia Broadcast Multicast Service, MBMS, applied to a network side which is a base station, comprising a first receiving module (42) and a first processing module (44), wherein
the first receiving module (42) is configured to receive from a User Equipment, UE, information about an MBMS service that the UE is interested in; and
the first processing module (44) comprises:
a first determination module (441), configured to determine whether the UE has a Carrier Aggregation, CA, capability;
a first judgment module (442), configured to determine whether the UE supports receiving the MBMS service on a Secondary Cell, SCell, in the serving cell when the first determination module (441) determines that the UE has the CA capability;
a second determination module, configured to determine whether the frequency corresponding to the MBMS service that is of interest to the UE is the frequency of the serving cell of the UE, when the first determination module (441) determines that the UE has the CA capability and the first judgment module (442) determines that the UE supports receiving the MBMS service on the SCell in the serving cell;
a third determination module, configured to determine whether the frequency combination supported by the UE has been activated completely, when the second determination module determines that the frequency corresponding to the MBMS service that is of interest to the UE is not the frequency of the serving cell of the UE;
a first activation module configured to:
deactivate one SCell of the frequency combination and activate thereafter the frequency corresponding to the MBMS service that is of interest to the UE when the third determination module determines that the frequency combination supported by the UE has been activated completely; and
activate the frequency corresponding to the MBMS service that is of interest to the UE as the frequency corresponding to the SCell when the third determination module determines that the frequency combination supported by the UE has not been activated completely.

8. The processing apparatus according to claim 7, wherein the first processing module further comprises:
a first switching module (444), configured to switch the UE to the frequency corresponding to the MBMS service that is of interest to the UE when the first determination module (441) determines that the UE has the CA capability and the first judgment module (442) determines that the UE does not support receiving the MBMS service on a SCell in the serving cell.

9. The processing apparatus according to claim 7, wherein the first processing module comprises:
a second switching module (448), configured to switch the UE to the frequency corresponding to the MBMS service that is of interest to the UE when the UE has no CA capability and when the frequency corresponding to the MBMS service that is of interest to the UE is not the frequency of the serving cell of the UE.

10. A software for processing a Multimedia Broadcast Multicast Service, MBMS, which, when executed by a computer, causes the computer to carry out the method for processing the MBMS according to any one of claims 1 to 6.

11. A storage medium, storing the processing software according to claim 10.

## Patentansprüche

1. Verfahren zum Verarbeiten eines Multimedia-Broadcast-Multicast-Service (MBMS), Folgendes umfassend:
Empfangen (S202) von Informationen über einen MBMS-Dienst, an dem die Anwenderausrüstung interessiert ist, durch eine Netzwerkseite von einer Anwenderausrüstung (UE - User Equipment),
Bestimmen, ob die UE eine Carrier-Aggregation(CA)-Fähigkeit aufweist, durch die Netzwerkseite,
wenn die Netzwerkseite bestimmt, dass die UE die CA-Fähigkeit aufweist, Bestimmen durch die Netzwerkseite, ob die UE das Empfangen des MBMS-Dienstes an einer Sekundärzelle (SCell - Secondary Cell) in der Dienstzelle unterstützt,
wenn die Netzwerkseite bestimmt, dass die UE die CA-Fähigkeit aufweist und dass die UE das Empfangen des MBMS-Dienstes an der Scell in der Dienstzelle unterstützt, Bestimmen durch die Netzwerkseite, ob die Frequenz, die dem MBMS-Dienst entspricht, der für die UE von Interesse ist, die Frequenz der Dienstzelle der UE ist,
wenn die Netzwerkseite bestimmt, dass die Frequenz, die dem MBMS-Dienst entspricht, der für die UE von Interesse ist, nicht die Frequenz der Dienstzelle der UE ist, Bestimmen durch die Netzwerkseite, ob die Frequenzkombination, die durch die UE unterstützt wird, vollständig aktiviert wurde,
wenn die Netzwerkseite bestimmt, dass die Frequenzkombination, die durch die UE unterstützt wird, vollständig aktiviert wurde, Deaktivieren einer Scell der Frequenzkombination durch die Netzwerkseite und danach Aktivieren der Frequenz, die dem MBMS-Dienst entspricht, der für die UE von Interesse ist, durch die Netzwerkseite und
wenn die Netzwerkseite bestimmt, dass die Frequenzkombination, die durch die UE unterstützt wird, nicht vollständig aktiviert wurde, Aktivieren der Frequenz, die dem MBMS-Dienst entspricht, der für die UE von Interesse ist, als die Frequenz, die der Scell entspricht, durch die Netzwerkseite.

2. Verarbeitungsverfahren nach Anspruch 1, ferner Folgendes umfassend:
wenn die Netzwerkseite bestimmt, dass die UE die CA-Fähigkeit aufweist und die UE das Empfangen des MBMS-Dienstes an der Scell der Dienstzelle nicht unterstützt, Schalten der UE auf die Frequenz, die dem MBMS-Dienst entspricht, der für die UE von Interesse ist, durch die Netzwerkseite.

3. Verarbeitungsverfahren nach Anspruch 1, ferner Folgendes umfassend:
Bestimmen durch die Netzwerkseite, dass die UE keine CA-Fähigkeit aufweist oder dass die UE die CA-Fähigkeit aufweist, aber eine gegenwärtige Primärzelle (PCell - Primary Cell) der UE nicht geeignet ist, eine Kombination mit der Frequenz des MBMS-Dienstes, der für die UE von Interesse ist, zu bilden,
Beurteilen durch die Netzwerkseite, ob die Frequenz oder die PCell der UE die gleiche wie die Frequenz des MBMS-Dienst ist, der für die UE von Interesse ist,
wenn ein Beurteilungsergebnis Nein lautet, Schalten der UE auf die Frequenz, die dem MBMS-Dienst entspricht, der für die UE von Interesse ist, durch die Netzwerkseite.

4. Verarbeitungsverfahren nach einem der Ansprüche 1 bis 3, wobei die Informationen über den MBMS-Dienst, der für die UE von Interesse ist, mindestens eines des Folgenden umfassen:
die Frequenz des MBMS-Dienstes, der für die UE von Interesse ist, und ob der MBMS-Dienst, der für die UE von Interesse ist, eine höhere Priorität hat als ein Unicast-Dienst.

5. Verarbeitungsverfahren nach Anspruch 4, wobei die Frequenz des MBMS-Dienstes, der für die UE von Interesse ist, eine Frequenz ist, die durch eine Systemnachricht oder eine Anwendungsschichtnachricht bestimmt wird und bei der der MBMS-Dienst, der für die UE von Interesse ist, durch ein Multicast-Broadcast-Einzelfrequenznetzwerk (MBSFN - Multicast Broadcast Single Frequency Network) übertragen wird.

6. Verarbeitungsverfahren nach Anspruch 4, wobei die Informationen über den MBMS-Dienst, der für die UE von Interesse ist, ferner Informationen zum Anzeigen umfasst, ob die UE das Empfangen des MBMS-Dienstes an der Scell unterstützt.

7. Vorrichtung zum Verarbeiten eines Multimedia-Broadcast-Multicast-Service (MBMS), der an einer Netzwerkseite angewandt wird, die eine Basisstation ist, umfassend ein erstes Empfangsmodul (42) und ein erstes Verarbeitungsmodul (44), wobei:
das erste Empfangsmodul (42) dafür konfiguriert ist, von einer Anwenderausrüstung (UE - User Equipment) Informationen über einen MBMS-Dienst, für den sich die UE interessiert, zu empfangen, und
das erste Verarbeitungsmodul (44) Folgendes umfasst:
ein erstes Bestimmungsmodul (441), das dafür konfiguriert ist zu bestimmen, ob die UE eine Carrier-Aggregation(CA)-Fähigkeit aufweist,
ein erstes Beurteilungsmodul (442), das dafür konfiguriert ist zu bestimmen, ob die UE das Empfangen des MBMS-Dienstes an einer Sekundärzelle (SCell - Secondary Cell) in der Dienstzelle unterstützt, wenn das erste Bestimmungsmodul (441) bestimmt, dass die UE die CA-Fähigkeit aufweist,
ein zweites Bestimmungsmodul, das dafür konfiguriert ist zu bestimmen, ob die Frequenz, die dem MBMS-Dienst entspricht, der für die UE von Interesse ist, die Frequenz der Dienstzelle der UE ist, wenn das erste Bestimmungsmodul (441) bestimmt, dass die UE die CA-Fähigkeit aufweist, und das erste Beurteilungsmodul (442) bestimmt, dass die UE das Empfangen des MBMS-Dienstes an der Scell in der Dienstzelle unterstützt,
ein drittes Bestimmungsmodul, das dafür konfiguriert ist zu bestimmen, ob die Frequenzkombination, die durch die UE unterstützt wird, vollständig aktiviert wurde, wenn das zweite Bestimmungsmodul bestimmt, dass die Frequenz, die dem MBMS-Dienst entspricht, der für die UE von Interesse ist, nicht die Frequenz der Dienstzelle der UE ist,
ein erstes Aktivierungsmodul, das für Folgendes konfiguriert ist:
Deaktivieren einer Scell der Frequenzkombination und danach Aktivieren der Frequenz, die dem MBMS-Dienst entspricht, der für die UE von Interesse ist, wenn das dritte Bestimmungsmodul bestimmt, dass die Frequenzkombination, die durch die UE unterstützt wird, vollständig aktiviert wurde, und
Aktivieren der Frequenz, die dem MBMS-Dienst entspricht, der für die UE von Interesse ist, als die Frequenz, die der Scell entspricht, wenn das dritte Bestimmungsmodul bestimmt, dass die Frequenzkombination, die durch die UE unterstützt wird, nicht vollständig aktiviert wurde.

8. Verarbeitungsvorrichtung nach Anspruch 7, wobei das erste Verarbeitungsmodul ferner Folgendes umfasst:
ein erstes Schaltmodul (444), das dafür konfiguriert ist, die UE auf die Frequenz zu schalten, die dem MBMS-Dienst entspricht, der für die UE von Interesse ist, wenn das erste Bestimmungsmodul (441) bestimmt, dass die UE die CA-Fähigkeit aufweist, und das erste Beurteilungsmodul (442) bestimmt, dass die UE das Empfangen des MBMS-Dienstes an der Scell der Dienstzelle nicht unterstützt.

9. Verarbeitungsvorrichtung nach Anspruch 7, wobei die erste Verarbeitungsvorrichtung Folgendes umfasst:
ein zweites Schaltmodul (448), das dafür konfiguriert ist, die UE auf die Frequenz zu schalten, die dem MBMS-Dienst entspricht, der für die UE von Interesse ist, wenn die UE keine CA-Fähigkeit aufweist und wenn die Frequenz, die dem MBMS-Dienst entspricht, der für die UE von Interesse ist, nicht die Frequenz der Dienstzelle der UE ist.

10. Software zum Verarbeiten eines Multimedia-Broadcast-Multicast-Service (MBMS), die bei Ausführung durch einen Computer den Computer veranlasst, das Verfahren zum Verarbeiten des MBMS nach einem der Ansprüche 1 bis 6 auszuführen.

11. Speichermedium, das die Verarbeitungssoftware nach Anspruch 10 speichert.

## Revendications

1. Procédé de traitement d'un service de radiodiffusion multimédia multidestinataire, MBMS, comprenant les étapes ci-dessous consistant à :
recevoir (S202), sur un côté de réseau, en provenance d'un équipement d'utilisateur, UE, des informations concernant un service MBMS qui présente un intérêt pour l'équipement UE ;
déterminer, par le biais du côté de réseau, si l'équipement UE dispose d'une capacité d'agrégation de porteuses, CA ;
lorsque le côté de réseau détermine que l'équipement UE dispose de la capacité d'agrégation CA, déterminer, par le biais du côté de réseau, si l'équipement UE prend en charge la réception du service MBMS sur une cellule secondaire, « SCell », dans la cellule de service ;
lorsque le côté de réseau détermine que l'équipement UE dispose de la capacité d'agrégation CA et que l'équipement UE prend en charge la réception du service MBMS sur la cellule « SCell » dans la cellule de service, déterminer, par le biais du côté de réseau, si la fréquence correspondant au service MBMS qui présente un intérêt pour l'équipement UE est la fréquence de la cellule de service de l'équipement UE ;
lorsque le côté de réseau détermine que la fréquence correspondant au service MBMS qui présente un intérêt pour l'équipement UE n'est pas la fréquence de la cellule de service de l'équipement UE, déterminer, par le biais du côté de réseau, si la combinaison de fréquences prise en charge par l'équipement UE a été complètement activée ;
lorsque le côté de réseau détermine que la combinaison de fréquences prise en charge par l'équipement UE a été complètement activée, désactiver, par le biais du côté de réseau, une cellule « SCell » de la combinaison de fréquences, et activer subséquemment, par le biais du côté de réseau, la fréquence correspondant au service MBMS qui présente un intérêt pour l'équipement UE ; et
lorsque le côté de réseau détermine que la combinaison de fréquences prise en charge par l'équipement UE n'a pas été complètement activée, activer, par le biais du côté de réseau, la fréquence correspondant au service MBMS qui présente un intérêt pour l'équipement UE en tant que la fréquence correspondant à la cellule « SCell ».

2. Procédé de traitement selon la revendication 1, comprenant en outre l'étape ci-dessous consistant à :
lorsque le côté de réseau détermine que l'équipement UE dispose de la capacité d'agrégation CA, et que l'équipement UE ne prend pas en charge la réception du service MBMS sur la cellule « SCell » dans la cellule de service, commuter, par le biais du côté de réseau, l'équipement UE sur la fréquence correspondant au service MBMS qui présente un intérêt pour l'équipement UE.

3. Procédé de traitement selon la revendication 1, comprenant en outre les étapes ci-dessous consistant à :
déterminer, par le biais du côté de réseau, que l'équipement UE ne dispose pas de capacité d'agrégation CA, ou que l'équipement UE dispose de la capacité d'agrégation CA, mais qu'une cellule primaire en cours, « PCell », de l'équipement UE n'est pas en mesure de former une combinaison avec la fréquence du service MBMS qui présente un intérêt pour l'équipement UE ;
évaluer, par le biais du côté de réseau, si la fréquence ou la cellule « PCell » de l'équipement UE est la même que la fréquence du service MBMS qui présente un intérêt pour l'équipement UE ;
lorsque le résultat de l'évaluation est négatif, commuter, par le biais du côté de réseau, l'équipement UE, sur la fréquence correspondant au service MBMS qui présente un intérêt pour l'équipement UE.

4. Procédé de traitement selon l'une quelconque des revendications 1 à 3, dans lequel les informations concernant le service MBMS qui présente un intérêt pour l'équipement UE indiquent au moins l'un des éléments suivants :
la fréquence du service MBMS qui présente un intérêt pour l'équipement UE, et si le service MBMS qui présente un intérêt pour l'équipement UE a une priorité plus élevée que le service de monodiffusion.

5. Procédé de traitement selon la revendication 4, dans lequel la fréquence du service MBMS qui présente un intérêt pour l'équipement UE est une fréquence qui est déterminée par un message système ou un message de couche d'application, et à laquelle le service MBMS qui présente un intérêt pour l'équipement UE est transmis par un réseau à fréquence unique de diffusion multidestinataire, MBSFN.

6. Procédé de traitement selon la revendication 4, dans lequel les informations concernant le service MBMS qui présente un intérêt pour l'équipement UE comprennent en outre des informations pour indiquer si l'équipement UE prend en charge la réception du service MBMS sur la cellule « SCell ».

7. Appareil destiné à traiter un service de radiodiffusion multimédia multidestinataire, MBMS, appliqué à un côté de réseau qui est une station de base, comprenant un premier module de réception (42) et un premier module de traitement (44), dans lequel :
le premier module de réception (42) est configuré de manière à recevoir, en provenance d'un équipement d'utilisateur, UE, des informations concernant un service MBMS qui présente un intérêt pour l'équipement UE ; et
le premier module de traitement (44) comprend :
un premier module de détermination (441), configuré de manière à déterminer si l'équipement UE dispose d'une capacité d'agrégation de porteuses, CA ;
un premier module d'évaluation (442), configuré de manière à déterminer si l'équipement UE prend en charge la réception du service MBMS sur une cellule secondaire, « SCell », dans la cellule de service, lorsque le premier module de détermination (441) détermine que l'équipement UE dispose de la capacité d'agrégation CA ;
un deuxième module de détermination, configuré de manière à déterminer si la fréquence correspondant au service MBMS qui présente un intérêt pour l'équipement UE est la fréquence de la cellule de service de l'équipement UE, lorsque le premier module de détermination (441) détermine que l'équipement UE dispose de la capacité d'agrégation CA et lorsque le premier module d'évaluation (442) détermine que l'équipement UE prend en charge la réception du service MBMS sur la cellule « SCell » dans la cellule de service ;
un troisième module de détermination, configuré de manière à déterminer si la combinaison de fréquences prise en charge par l'équipement UE a été complètement activée, lorsque le deuxième module de détermination détermine que la fréquence correspondant au service MBMS qui présente un intérêt pour l'équipement UE n'est pas la fréquence de la cellule de service de l'équipement UE ;
un premier module d'activation configuré de manière à :
désactiver une cellule « SCell » de la combinaison de fréquences et activer subséquemment la fréquence correspondant au service MBMS qui présente un intérêt pour l'équipement UE lorsque le troisième module de détermination détermine que la combinaison de fréquences prise en charge par l'équipement UE a été complètement activée ; et
activer la fréquence correspondant au service MBMS qui présente un intérêt pour l'équipement UE en tant que la fréquence correspondant à la cellule « SCell » lorsque le troisième module de détermination détermine que la combinaison de fréquences prise en charge par l'équipement UE n'a pas été complètement activée.

8. Appareil de traitement selon la revendication 7, dans lequel le premier module de traitement comprend en outre :
un premier module de commutation (444), configuré de manière à commuter l'équipement UE sur la fréquence correspondant au service MBMS qui présente un intérêt pour l'équipement UE lorsque le premier module de détermination (441) détermine que l'équipement UE dispose de la capacité d'agrégation CA et lorsque le premier module d'évaluation (442) détermine que l'équipement UE ne prend en charge la réception du service MBMS sur une cellule « SCell » dans la cellule de service.

9. Appareil de traitement selon la revendication 7, dans lequel le premier module de traitement comprend :
un second module de commutation (448), configuré de manière à commuter l'équipement UE sur la fréquence correspondant au service MBMS qui présente un intérêt pour l'équipement UE lorsque l'équipement UE ne dispose pas de capacité d'agrégation CA, et lorsque la fréquence correspondant au service MBMS qui présente un intérêt pour l'équipement UE n'est pas la fréquence de la cellule de service de l'équipement UE.

10. Logiciel destiné à traiter un service de diffusion multimédia multidestinataire, MBMS, qui, lorsqu'il est exécuté par un ordinateur, amène l'ordinateur à mettre en œuvre le procédé de traitement du service MBMS selon l'une quelconque des revendications 1 à 6.

11. Support de stockage qui stocke le logiciel de traitement selon la revendication 10.
